# FASCICULE DE BREVET EUROPEEN

(11) **EP 3 898 210 B1**
(45) Date de publication et mention de la délivrance du brevet: **08.02.2023**
(21) Numéro de dépôt: 19831607.7
(22) Date de dépôt: 12.12.2019
(51) Int. Cl.: B29D 30/06

(54) **MOULE À SECTEURS POUR PNEUMATIQUE, NOTAMMENT POUR PNEUMATIQUE DE VÉHICULE À USAGE AGRICOLE, ET PROCÉDÉ DE MOULAGE ASSOCIÉ**
FORM MIT SEKTOREN FÜR REIFEN, INSBESONDERE REIFEN FÜR LANDWIRTSCHAFTLICHE FAHRZEUGE, UND ZUGEHÖRIGES FORMVERFAHREN
MOLD WITH SECTORS FOR TIRES, IN PARTICULAR TIRES FOR AGRICULTURAL VEHICLES, AND ASSOCIATED MOLDING METHOD

(30) Priorité: 19.12.2018 FR 1873393
(43) Date de publication de la demande: 27.10.2021
(73) Titulaire: COMPAGNIE GENERALE DES ETABLISSEMENTS MICHELIN, 63000 Clermont-Ferrand (FR)
(72) Inventeur: OUAMANE, Luc, 63040 Clermont-Ferrand Cedex 09 (FR); FERRIERE, Florian, 63040 Clermont-Ferrand Cedex 09 (FR); CHALAND, Stéphane, 63040 Clermont-Ferrand Cedex 09 (FR); CEALIS, Philippe, 63040 Clermont-Ferrand Cedex 09 (FR); VIARD, Romain, 63040 Clermont-Ferrand Cedex 09 (FR)
(74) Mandataire: Noel, Luminita
(86) Numéro de dépôt international: PCT/EP2019/084830
(87) Numéro de publication internationale: WO 2020/126798

(56) Documents cités:
- EP-A1- 2 897 790
- US-A- 3 779 677

## Description

La présente invention concerne le domaine des moules de cuisson ou vulcanisation pour pneumatiques de véhicules, et notamment pour véhicules à usage agricole, par exemple des tracteurs agricoles ou véhicules agro-industriels.

Un pneumatique agricole est destiné à rouler sur divers types de sols tels que la terre plus ou moins compacte des champs, les chemins non goudronnés d'accès aux champs et les surfaces goudronnées des routes. Compte tenu de la diversité de l'usage en champ et sur route, un pneumatique agricole, et en particulier sa bande de roulement, doit présenter un compromis de performances variable selon l'usage.

De manière connue en soi, le levier principal de gestion du compromis de performances d'un pneumatique agricole, soumis à une charge donnée, est sa pression de gonflage. Dans le cas d'un usage en champ, sur un sol plus ou moins meuble, il est recommandé de gonfler le pneumatique à la pression la plus basse possible compatible avec son endurance notamment de sorte à limiter le compactage du sol au passage du véhicule agricole, ce qui favorise le rendement agronomique des cultures. Au contraire, dans le cas d'un usage sur chemin ou sur route, par exemple lors des déplacements du véhicule agricole en dehors de sa zone de travail, une plus haute pression est nécessaire pour garantir un bon comportement routier et une faible résistance au roulement.

La bande de roulement d'un pneumatique agricole comprend classiquement deux rangées de barrettes qui sont constituées d'éléments en relief de forme globalement parallélépipédique allongée. Les barrettes sont séparées les unes des autres dans le sens circonférentiel par des sillons. De sorte à favoriser les performances du pneumatique, la bande de roulement peut également comprendre, dans sa partie centrale, une rangée de pains ou blocs de gomme formant conjointement avec les barrettes la sculpture du pneumatique.

Pour fabriquer un pneumatique agricole, une première solution consiste à utiliser un moule comprenant deux parties inférieure et supérieure qui sont mobiles axialement l'une relativement par rapport à l'autre entre une position de fermeture du moule dans laquelle ces parties viennent axialement en appui, et une position d'ouverture pour le démoulage du pneumatique.

Avec un tel moule, les parties inférieure et supérieure de celui-ci assurent le moulage de la bande du roulement du pneumatique.

Or, les sculptures des pneumatiques agricoles présentent de plus en plus des formes complexes de sorte à optimiser les performances lors des usages en champ et sur route, ce qui pose des problèmes au démoulage.

Dès lors, pour fabriquer un pneumatique agricole, une deuxième solution consiste à utiliser un moule équipé d'une pluralité de secteurs disposés axialement entre les parties inférieure et supérieure dudit moule pour assurer le moulage de la partie centrale de la bande de roulement du pneumatique. Ces secteurs sont reliés aux parties inférieure et supérieure de sorte qu'un mouvement axial relatif de celles-ci provoque le déplacement radial des secteurs. Pour plus de détails sur un tel moule à secteurs, on pourra par exemple se référer au brevet européen EP-B1-1 222 063.

Toutefois, même si un tel moule à secteurs permet le démoulage de formes plus complexes pour les sculptures de la bande de roulement du pneumatique, il nécessite l'utilisation d'actionneurs pour opérer le déplacement radial des secteurs. Or, de tels actionneurs induisent un surcoût et une maintenance supérieurs des machines.

La présente invention vise à remédier à cet inconvénient. Le document de brevet EP 2 897 790 A1 divulgue un moule de pneu ayant les caractéristiques du préambule de la revendication indépendante 1.

La présente invention concerne un moule pour pneumatique du type comprenant une bande de roulement et deux flancs latéraux. Le moule comprend des parties inférieure et supérieure destinées à assurer le moulage d'au moins les flancs latéraux du pneumatique qui sont mobiles au moins axialement l'une relativement à l'autre entre une position rapprochée de moulage du pneumatique et une position éloignée de démoulage dudit pneumatique.

Le moule comprend également une pluralité de secteurs centraux en contact axialement contre les parties inférieure et supérieure dans leur position rapprochée de moulage et destinés à assurer le moulage d'au moins une partie centrale de la bande de roulement dudit pneumatique. Lesdits secteurs sont répartis dans le sens circonférentiel et mobiles par rapport auxdites parties inférieure et supérieure.

Selon une caractéristique générale du moule, celui-ci comprend en outre pour chaque secteur un organe d'accouplement permanent dudit secteur à la partie supérieure qui est solidaire de ladite partie supérieure, et un organe d'accouplement temporaire dudit secteur à la partie inférieure qui est solidaire de ladite partie inférieure.

Les organes d'accouplement permanent et temporaire associés à chaque secteur sont configurés pour obtenir :
lors d'un mouvement d'éloignement axial des parties inférieure et
supérieure depuis leur position rapprochée de moulage, un déplacement radial vers l'extérieur dudit secteur suivi d'un basculement angulaire vers l'extérieur dudit secteur sous l'effet de son propre poids, et
lors d'un mouvement de rapprochement axial des parties inférieure et supérieure depuis leur position éloignée de démoulage, des mouvements inverses dudit secteur.

Chaque secteur est basculable angulairement autour d'un axe perpendiculaire à la direction de déplacement axial des parties inférieure et supérieure du moule, et perpendiculaire à la direction de déplacement radial dudit secteur.

Par « pneumatique », on entend tous les types de bandages élastiques soumis ou non à une pression interne.

On entend par « bande de roulement » d'un pneumatique, une quantité de matériau caoutchoutique délimitée par deux surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement et un bourrelet de ce pneumatique, débutant à partir des extrémités des découpures de la bande de roulement et se prolongeant jusqu'au bourrelet.

Avec le moule de l'invention, lors de son ouverture, la cinématique de chaque secteur se compose d'un mouvement de recul radial et ensuite d'un mouvement de basculement. Ces deux mouvements sont effectués de façon successive, et de façon autonome, i.e. sans actionneur spécifique.

Grâce à ce double mouvement des secteurs, la hauteur des blocs de gomme pouvant être moulés est augmentée par rapport aux hauteurs des blocs de gomme obtenus lors du moulage avec les moules de cuisson conventionnels en deux parties.

Selon une conception particulière avantageuse du moule, les parties inférieure et supérieure sont pourvues chacune d'une face d'appui en contact axial contre une face frontale de chaque secteur dans la position rapprochée de moulage desdites parties, et d'une face de maintien tronconique prolongeant vers l'intérieur ladite face d'appui et engagée radialement contre une face extérieure complémentaire de chaque secteur dans ladite position rapprochée de moulage.

Avec une telle conception, il n'est pas nécessaire de prévoir des moyens spécifiques pour assurer le maintien en position des secteurs dans la position de moulage, tels qu'une couronne de serrage externe additionnelle entourant radialement les secteurs et nécessitant l'utilisation d'un actionneur spécifique.

Ainsi, il est possible de monter le moule dans une presse conventionnelle, par exemple avec une cinématique simple d'ouverture et de fermeture verticale, sans adaptation spécifique de la presse.

Même si cette conception particulière du moule est particulièrement avantageuse, il reste cependant possible, dans une variante de réalisation, de ne pas prévoir le coincement des secteurs par les parties inférieure et supérieure du moule dans la position de moulage. Dans ce cas, le moule peut alors comprendre une couronne de serrage externe additionnelle telle qu'indiquée précédemment pour le maintien en position des secteurs dans la position de moulage.

Pour assurer les déplacements radiaux de chaque secteur, chacun des organes d'accouplement permanent et temporaire associés audit secteur peut comprendre une rainure de guidage à l'intérieur de laquelle est engagé de manière coulissante un doigt dudit secteur et qui est pourvue d'au moins une partie oblique. Avantageusement, le doigt de chaque secteur engagé dans la rainure de guidage de l'organe d'accouplement permanent associé peut former un axe de basculement dudit secteur.

Lorsque le moule est réalisé selon la conception particulière indiquée ci-avant, les organes d'accouplement permanent et temporaire associés à chaque secteur sont de préférence configurés pour obtenir, lors de l'éloignement axial des parties inférieure et supérieure depuis leur position rapprochée, le désengagement dudit secteur desdites parties inférieure et supérieure avant son déplacement radial vers l'extérieur. Dans ce but, la rainure de guidage de chacun des organes d'accouplement permanent et temporaire associés à chaque secteur peut être pourvue en outre d'une partie axiale pour obtenir le désengagement dudit secteur des parties inférieure et supérieure, la partie oblique de ladite rainure de guidage prolongeant vers l'extérieur la partie axiale.

De préférence, la partie oblique de la rainure de guidage de chaque organe d'accouplement temporaire est ouverte à une extrémité.

Par ailleurs, pour ramener chaque secteur de sa position basculée lors de la fermeture du moule, l'organe d'accouplement temporaire associé audit secteur peut comprendre, dans le prolongement de la partie oblique de la rainure de guidage, une partie en saillie venant en contact contre le doigt dudit secteur lors du rapprochement axial des parties inférieure et supérieure.

Pour des raisons de simplicité de fabrication, les organes d'accouplement permanent et temporaire associés à chaque secteur sont de préférence fixés respectivement sur une surface extérieure des parties inférieure et supérieure.

Selon une conception spécifique du moule, chacune des parties inférieure et supérieure comprend une couronne destinée à assurer le moulage d'une partie latérale de la bande de roulement du pneumatique adjacente à la partie centrale de ladite bande, les secteurs étant interposés axialement entre les couronnes desdites parties inférieure et supérieure dans leur position rapprochée de moulage.

Avec cette conception, les organes d'accouplement permanent et temporaire associés à chaque secteur sont de préférence fixés respectivement sur la surface extérieure des couronnes des parties inférieure et supérieure.

Dans un mode de réalisation particulier, le moule peut comprendre en outre des moyens de verrouillage de chaque secteur dans sa position basculée. Cette caractéristique est optionnelle lorsque le moule est prévu pour être monté dans une presse avec une cinématique simple d'ouverture et de fermeture purement verticale, c'est-à-dire sans basculement angulaire de la partie supérieure dudit moule combiné au déplacement vertical des parties inférieure et supérieure. Cette caractéristique se révèle particulièrement avantageuse pour des pneus de grande dimension, où le basculement permet une extraction plus facile du bandage.

Les moyens de verrouillage peuvent par exemple comprendre au moins un aimant permanent fixé sur chaque secteur et apte à maintenir la position basculée dudit secteur par la force d'attraction magnétique exercée sur l'organe d'accouplement permanent associé audit secteur. Alternativement, il est possible de prévoir une fixation du ou des aimants sur l'organe d'accouplement permanent et un maintien de la position basculée du secteur associé par la force d'attraction magnétique exercée par le ou les aimants sur ledit secteur.

L'invention concerne également un pneumatique obtenu par moulage à l'aide d'un moule tel que défini précédemment.

L'invention concerne encore un procédé de moulage d'un pneumatique à l'aide d'un moule tel que défini précédemment et comprenant les étapes successives suivantes :
introduire une ébauche du pneumatique non vulcanisée dans le moule en configuration ouverte des parties inférieure et supérieure dudit moule,
fermer le moule par rapprochement axial des parties inférieure et supérieure dudit moule provoquant un basculement angulaire des secteurs dans le sens horaire puis un mouvement radial vers l'intérieur desdits secteurs,
mouler le pneumatique,
ouvrir le moule par éloignement axial des parties inférieure et supérieure dudit moule provoquant un mouvement radial vers l'extérieur des secteurs puis un basculement angulaire desdits secteurs dans le sens anti-horaire, et
extraire hors du moule le pneumatique moulé.

La présente invention sera mieux comprise à la lecture de la description détaillée d'un mode de réalisation pris à titre d'exemple nullement limitatif et illustré par les dessins annexés sur lesquels :
[Fig 1] est une vue en perspective d'un moule de cuisson pour pneumatique selon un exemple de réalisation de l'invention,
[Fig 2] est une vue en de dessus du moule de la figure 1,
[Fig 3] est une demi-vue en coupe du moule de la figure 1,
[Fig 4] est une vue de détail de la figure 3,
[Fig 5]
[Fig 6]
[Fig 7]
[Fig 8]
[Fig 9]

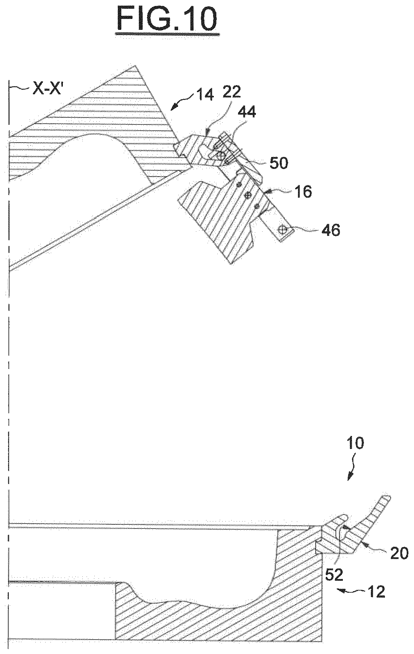

[Fig 10] sont des demi-vues en coupe illustrant l'ouverture du moule, et
[Fig 11]
[Fig 12]
[Fig 13]
[Fig 14]

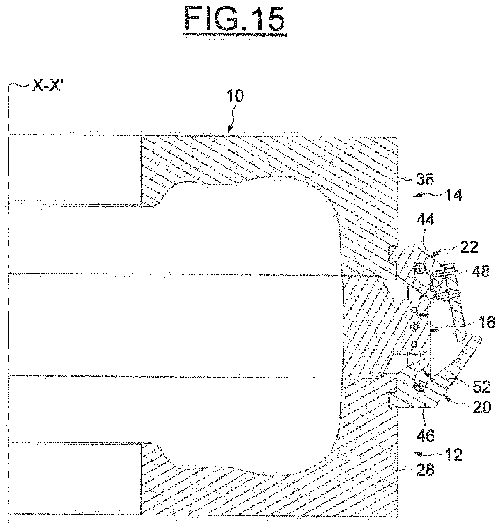

[Fig 15] sont des demi-vues en coupe illustrant la fermeture du moule.

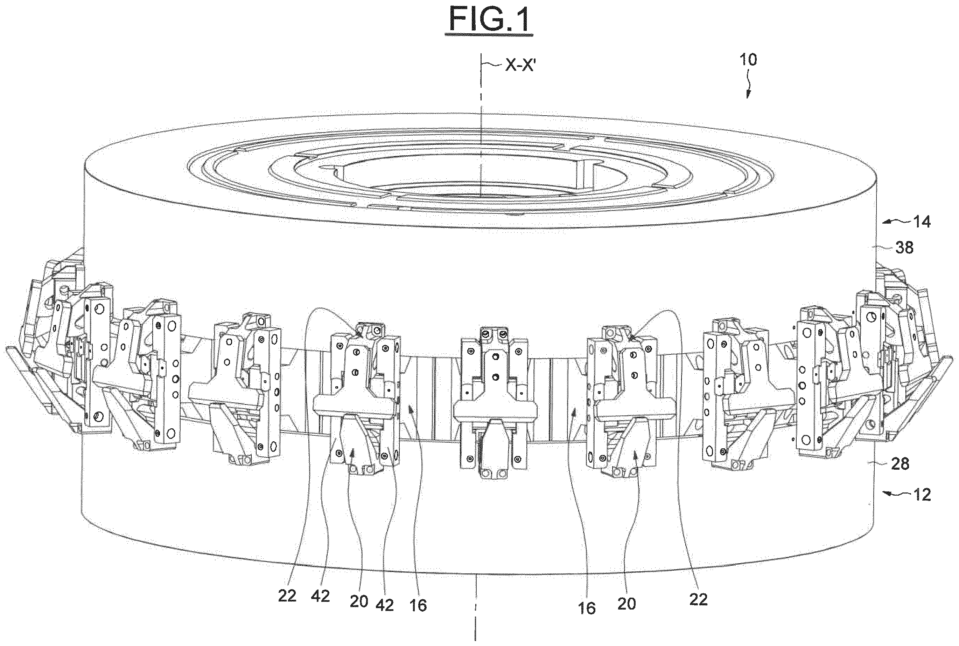

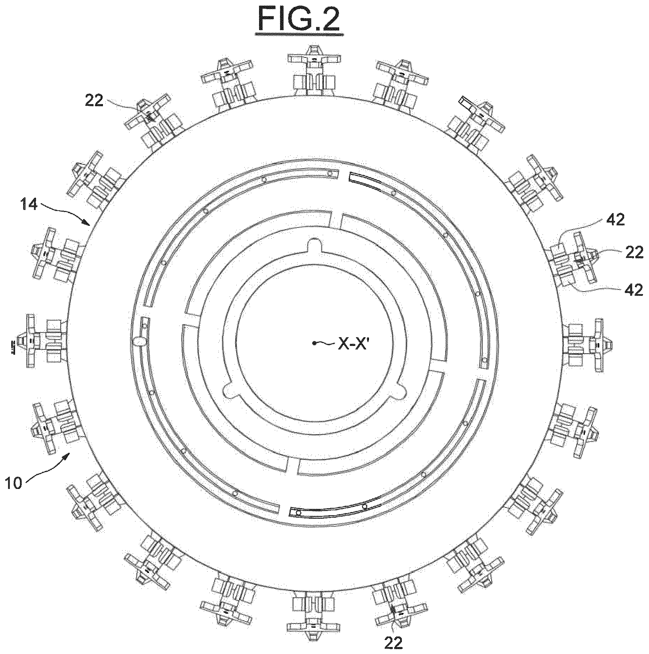

Sur les figures 1 à 3, on a représenté un exemple de réalisation d'un moule, référencé 10 dans son ensemble, prévu pour la cuisson ou vulcanisation d'un pneumatique (non illustré) pour un véhicule à usage agricole. Après moulage, le pneumatique est de forme annulaire et comprend une bande de roulement cylindrique prolongée par des premier et second flancs latéraux opposés.

Sur les figures, le moule 10 est illustré dans une position supposée verticale. L'axe X-X' du moule 10 coïncide avec l'axe de révolution du pneumatique.

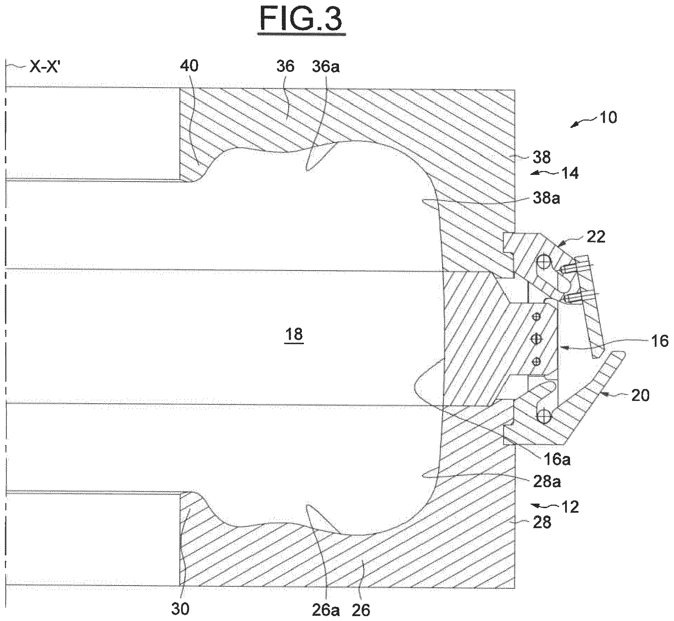

Comme illustré plus visiblement à la figure 3, le moule 10 comprend une partie inférieure 12, une partie supérieure 14 et une couronne de secteurs 16 centraux interposés axialement entre les parties inférieure et supérieure. Dans la position de fermeture du moule illustré à la figure 3, les parties inférieure 12 et supérieure 14 ainsi que la pluralité de secteurs 16 délimitent conjointement une empreinte 18 du pneumatique. La position de fermeture du moule 10 correspond à la position de moulage du pneumatique.

Les parties inférieure 12 et supérieure 14, et les secteurs 16 sont centrés sur l'axe X-X'. Les secteurs 16 sont répartis circonférentiellement autour dudit axe. Les secteurs 16 sont identiques entre eux. Les secteurs 16 sont en appui les uns contre les autres dans le sens circonférentiel. Les parties inférieure 12, supérieure 14 et les secteurs 16 peuvent être réalisés en matière métallique, notamment en acier. Les secteurs 16 peuvent comprendre une garniture de moulage en aluminium.

Comme cela sera décrit plus en détail par la suite, le moule 10 comprend encore, pour chaque secteur 16, une paire d'organes d'accouplement 20 inférieur et 22 supérieur pour obtenir un déplacement dudit secteur selon une cinématique particulière à partir de sa position de moulage lors de l'ouverture du moule, et un déplacement inverse lors de la fermeture dudit moule. Les secteurs 16 sont mobiles conjointement.

Les parties inférieure 12 et supérieure 14 du moule sont identiques et symétriques par rapport à un plan médian radial du moule 10, perpendiculaire à l'axe X-X'.

La partie inférieure 12 comprend une coquille 26 inférieure annulaire et une couronne 28 inférieure annulaire entourant radialement la coquille 26. La coquille 26 et la couronne 28 délimitent en partie l'empreinte 18 du moule. La coquille 26 assure le moulage d'un des flancs latéraux du pneumatique tandis que la couronne 28 assure le moulage d'une partie latérale de la bande de roulement du pneumatique adjacente audit flanc. La coquille 26 comprend une face intérieure 26a annulaire pour le moulage du flanc latéral du pneumatique. La couronne 28 comprend une face intérieure 28a annulaire pour le moulage de la partie latérale de la bande de roulement.

La partie inférieure 12 comprend encore un talon 30 annulaire pour le moulage d'un des talons latéraux du pneumatique. Dans l'exemple de réalisation illustré, la coquille 26, la couronne 28 et le talon 30 sont réalisés monoblocs. Alternativement, la coquille 26, la couronne 28 et le talon 30 peuvent être des pièces distinctes. La coquille 26 et la couronne 28 peuvent être fixées sur un plateau commun.

La partie supérieure 14 étant identique à la partie inférieure 12, elle ne sera pas décrite en détail. De manière similaire à la partie inférieure 12, la partie supérieure 14 comprend une coquille 36 supérieure pourvue d'une face intérieure 36a de moulage, une couronne 38 inférieure pourvue d'une face intérieure 38a de moulage, et un talon 40.

Dans la position de fermeture du moule 10, chaque secteur 16 est interposé axialement entre les couronnes 28, 38 des parties inférieure et supérieure. Chaque secteur 16 assure le moulage d'une zone de la partie centrale de la bande de roulement du pneumatique. Chaque secteur 16 présente une face intérieure 16a pour le moulage de cette zone de la partie centrale de la bande de roulement. Les faces intérieures 16a des secteurs et les faces intérieures 28a, 38a des couronnes des parties inférieure 12 et supérieure 14 assurent le moulage de la bande de roulement du pneumatique. Ces faces intérieures 16a, 28a et 38a permettent le moulage des sculptures de la bande de roulement du pneumatique. Sur la figure 3, il n'a pas été représenté l'empreinte des sculptures de la bande de roulement sur la face intérieure 16a du secteur ni sur les faces intérieures 28a et 38a des couronnes.

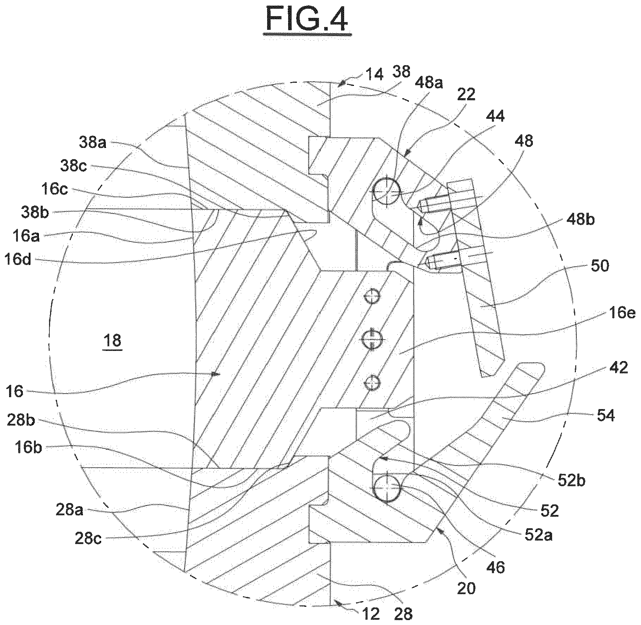

Comme illustré plus visiblement à la figure 4, chaque secteur 16 comprend deux faces frontales 16b, 16c inférieure et supérieure radiales opposées qui délimitent axialement la face intérieure 16a. Chaque secteur 16 comprend également une face extérieure 16d de forme tronconique qui est opposée à la face intérieure 16a en considérant le sens radial.

Dans la position de fermeture du moule 10, la couronne 28 de la partie inférieure vient axialement en appui contre la face frontale 16b inférieure de chaque secteur, et la couronne 38 de la partie supérieure vient axialement en appui contre la face frontale 16c supérieure de chaque secteur. Chaque couronne 28, 38 est également engagée radialement contre la face extérieure 16d de chaque secteur.

Chaque couronne 28, 38 comprend une face d'appui 28b, 38b radiale qui prolonge radialement la face intérieure 28a, 38a de moulage et qui vient axialement en appui contre la face frontale 16b, 16c de chaque secteur. Chaque couronne 28, 38 comprend également une face de maintien 28c, 38c tronconique qui prolonge radialement vers l'intérieur et axialement vers l'extérieur la face d'appui 28b, 38b. La face de maintien 28c, 38c de chaque couronne 28, 38 vient en appui radialement contre la face extérieure 16d complémentaire de chaque secteur.

Chaque secteur 16 comprend également une bride 16e de fixation prolongeant radialement vers l'extérieur la face extérieure 16d. La bride 16e s'étend radialement en saillie vers l'extérieur par rapport aux couronnes 28, 38. Chaque secteur 16 est équipé en outre de deux montants 42 de support fixés de part et d'autre de la bride 16e en considérant le sens circonférentiel. Les montants 42 sont situés à distance des couronnes 28, 38.

Chaque secteur 16 comprend également des premier et deuxième doigts 44, 46 de guidage s'étendant transversalement entre les montants 42. Les doigts 44, 46 sont disposés axialement de part et d'autre de la bride 16e du secteur. Les doigts 44, 46 s'étendent perpendiculairement par rapport aux directions axiale et radiale du moule.

Comme indiqué précédemment, les organes d'accouplement 20, 22 sont associés à chaque secteur 16 pour assurer le montage mobile dudit secteur relativement aux couronnes 28, 38.

L'organe d'accouplement 22 supérieur est fixé sur la partie supérieure 14. L'organe d'accouplement 22 est fixé sur la couronne 38 de la partie supérieure. L'organe d'accouplement 22 est fixé sur la surface extérieure (non référencée) de la couronne 38. L'organe d'accouplement 22 comprend une rainure 48 de guidage à l'intérieur de laquelle s'étend le premier doigt 44 du secteur associé. La rainure 48 comprend une partie axiale 48a rectiligne verticale qui est prolongée à une extrémité inférieure par une partie oblique 48b qui s'étend vers le bas du côté opposé à la couronne 38. La rainure 48 est oblongue. La rainure 48 est ici traversante dans l'épaisseur de l'organe d'accouplement 22 supérieur. La rainure 48 est délimitée dans le sens de la largeur par deux parois latérales opposées en regard et dans le sens de la longueur par deux parois d'extrémité opposées, ici de forme arrondie.

Dans la position de fermeture du moule 10, le doigt 44 de chaque secteur est logé dans la partie axiale 48a de la rainure et vient axialement en butée contre la paroi d'extrémité de ladite partie axiale. Sur l'organe d'accouplement 22 supérieur est fixée une platine 50 métallique pour assurer le verrouillage du secteur associé lors de phases d'ouverture et de fermeture du moule comme cela sera décrit plus en détail par la suite. La platine 50 est fixée ici sur l'organe d'accouplement 22 du côté à la couronne 38 de la partie supérieure. Pour assurer ce verrouillage de chaque secteur 16 avec l'organe d'accouplement 22 associé, des aimants (non représentés) sont fixés sur la bride 16e de fixation et sur les montants 42 dudit secteur.

L'organe d'accouplement 20 inférieur est fixé sur la partie inférieure 12. L'organe d'accouplement 20 est fixé sur la couronne 28 de la partie inférieure. L'organe d'accouplement 20 est fixé sur la surface extérieure (non référencée) de la couronne 28. L'organe d'accouplement 20 comprend une rainure 52 de guidage à l'intérieur de laquelle s'étend le deuxième doigt 46 du secteur associé. La rainure 52 comprend une partie axiale 52a rectiligne verticale qui est prolongée à une extrémité supérieure par une partie oblique 52b qui s'étend vers le haut du côté opposé à la couronne 28. L'extrémité de la partie oblique 52b de la rainure est ouverte vers l'extérieur. La rainure 52 est oblongue. La rainure 52 est délimitée dans le sens de la largeur par deux parois latérales opposées en regard et dans le sens de la longueur par une paroi d'extrémité située au niveau de la partie axiale 52a.

Dans la position de fermeture du moule 10, le doigt 46 de chaque secteur est logé dans la partie axiale 52a de la rainure et vient axialement en butée contre la paroi d'extrémité de ladite partie axiale. L'organe d'accouplement 20 inférieur comprend également une partie en saillie 54 s'étendant obliquement vers l'extérieur et qui prolonge la paroi latérale inférieure de la partie oblique 52b de la rainure.

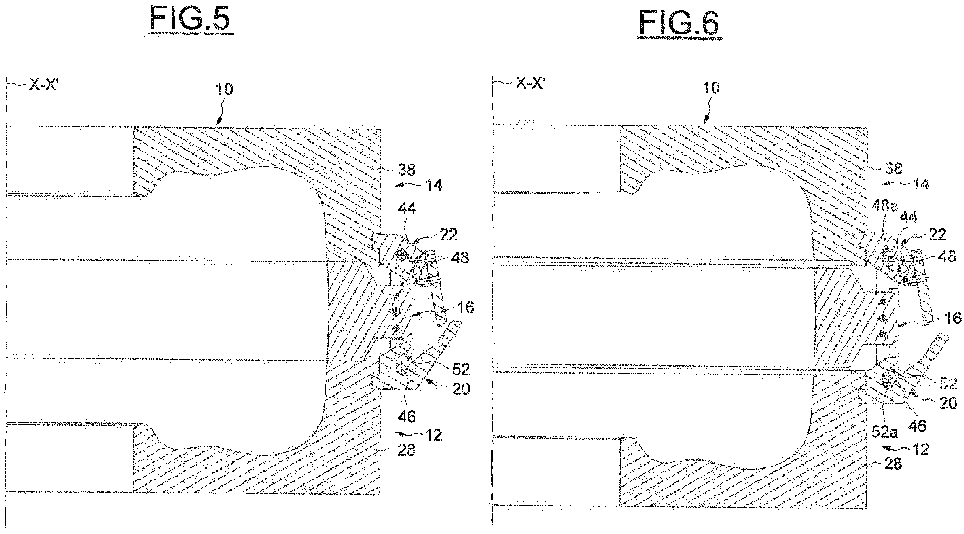

En référence aux figures 5 à 10, on va maintenant décrire l'ouverture du moule 10. A partir de la position de fermeture du moule 10 illustrée à nouveau à la figure 5, les parties inférieure 12 et supérieure 14 s'éloignent axialement l'une de l'autre.

Comme cela est illustré à la figure 6, lors d'une première phase de ce mouvement d'éloignement axial, les doigts 44, 46 de chaque secteur coulissent axialement à l'intérieur des parties axiales 48a, 52a des rainures des organes d'accouplement 22, 20. La dimension axiale des parties axiales 48a, 52a des rainures est prévue pour obtenir le désengagement des secteurs 16 des couronnes 28, 38 des parties inférieure et supérieure. Lorsque les doigts 44, 46 sont situés aux extrémités des parties axiales 48a, 52a des rainures, l'éloignement axial des parties inférieure 12 et supérieure 14 est tel qu'il existe un premier jeu espace axial entre chaque secteur 16 et la couronne 38, et un deuxième jeu espace axial entre chaque secteur et la couronne 28.

Lors de cette première phase du mouvement d'éloignement axial des parties inférieure 12 et supérieure 14, aucun mouvement des secteurs 16 ne se produit. Chaque secteur 16 se trouve encore dans sa position de moulage.

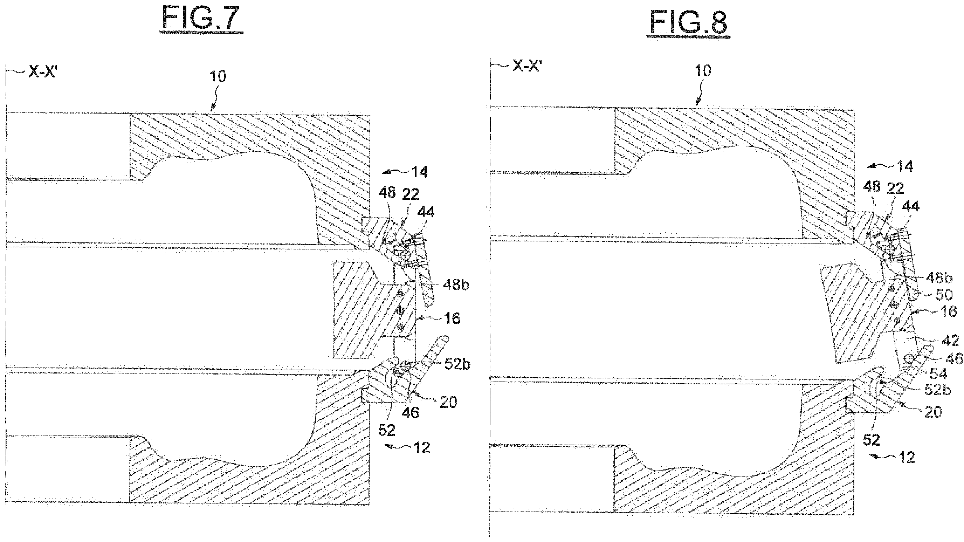

Ensuite, dans une deuxième phase du mouvement d'éloignement axial des parties inférieure 12 et supérieure 14 qui se poursuit, les doigts 44, 46 de chaque secteur coulissent à l'intérieur des parties obliques 48b, 52b des rainures des organes d'accouplement 22, 20 comme cela est illustré à la figure 7. Lors de cette deuxième phase, il se produit alors un déplacement radial vers l'extérieur de chaque secteur 16 à partir de sa position de moulage. Chaque secteur 16 est donc mobile dans le sens radial de sa position de moulage vers une position reculée. A titre indicatif, le recul radial des secteurs 16 est de l'ordre de 30 mm dans l'exemple de réalisation illustré. Il est bien étendu possible de prévoir d'autres valeurs de déplacement radial.

Lorsque le doigt 44 de chaque secteur est en appui contre la paroi d'extrémité de la partie oblique 48b de la rainure de l'organe d'accouplement 22, le doigt 46 dudit secteur est situé hors de la partie oblique 52b ouverte de la rainure de l'organe d'accouplement 20. Dans cette position, chaque secteur 16 n'est donc plus accouplé à la partie inférieure 12 par l'intermédiaire de l'organe d'accouplement 20 inférieur.

Chaque organe d'accouplement 20 inférieur forme donc un organe d'accouplement temporaire du secteur 16 associé à la partie inférieure 12 du moule, l'organe d'accouplement 22 supérieur formant un organe d'accouplement permanent dudit secteur à la partie supérieure 14.

Ensuite, lors de la poursuite du mouvement d'éloignement axial des parties inférieure 12 et supérieure 14, dans une troisième phase, chaque secteur 16 bascule angulairement vers l'extérieur du moule comme cela est illustré à la figure 8. Le basculement angulaire de chaque secteur se produit autour du doigt 44 dudit secteur formant axe de basculement. Le basculement angulaire de chaque secteur 16 est une rotation dudit secteur autour du doigt 44 dans le sens anti-horaire. A titre indicatif, le basculement angulaire des secteurs est de l'ordre de 10 degrés dans l'exemple de réalisation illustré. Il est là aussi possible de prévoir d'autres valeurs d'angle pour ce basculement.

Le basculement angulaire de chaque secteur 16 est rendu possible par le fait que le doigt 46 dudit secteur n'est plus en prise avec les parois latérales délimitant la partie oblique 52b de la rainure de l'organe d'accouplement 20 inférieur. Le basculement angulaire de chaque secteur 16 intervient dans la mesure où, avant basculement, le centre de gravité du secteur est décalé radialement vers l'intérieur du moule par rapport au doigt 44.

Dans l'exemple de réalisation illustré, lors du basculement angulaire de chaque secteur 16 dans le sens anti-horaire, le doigt 46 dudit secteur se déplace le long de la partie en saillie 54 de l'organe d'accouplement 20 inférieur associé. Ce contact entre le doigt 46 de chaque secteur et l'organe d'accouplement 20 associé n'est pas nécessaire pour le basculement angulaire du secteur 16 lors de cette phase d'ouverture du moule 10, mais permet le retour dudit secteur dans sa position reculée non basculée lors d'une phase de fermeture du moule 10 comme cela sera décrit plus en détail par la suite.

Lors du basculement de chaque secteur 16, les montants 42 dudit secteur viennent buter contre la platine 50 métallique de l'organe d'accouplement 22 supérieur associé dans les zones des aimants montés sur ledit secteur. Ce qui provoque par attraction magnétique des aimants fixés sur les montants 42 et la bride 16e de chaque secteur le verrouillage du secteur 16 dans sa position basculée.

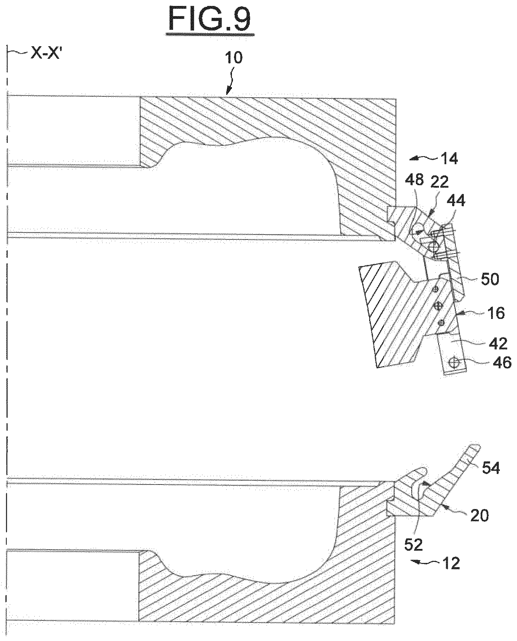

L'éloignement axial des parties inférieure 12 et supérieure 14 se poursuit dans une quatrième phase illustrée à la figure 9. Enfin, dans une cinquième et dernière phase de l'ouverture du moule 10 illustrée à la figure 10, la partie supérieure 14 bascule angulairement par rapport à la partie inférieure 12 dans le sens anti-horaire jusqu'à sa position d'ouverture maximale.

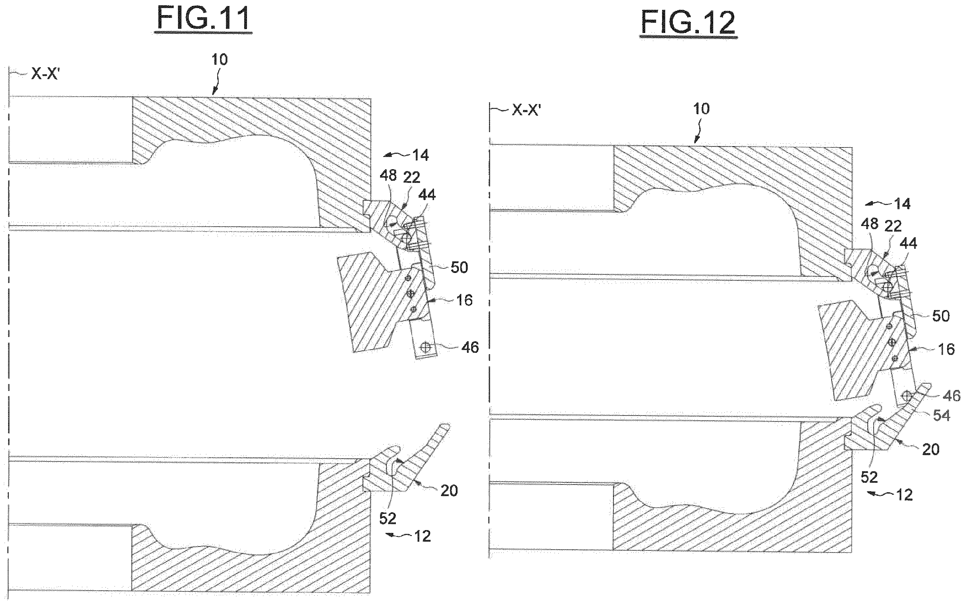

En référence aux figures 11 à 15, on va maintenant décrire la fermeture du moule 10 à partir de cette position d'ouverture maximale.

Dans une première phase de la fermeture du moule 10 illustrée à la figure 11, la partie supérieure 14 bascule angulairement par rapport à la partie inférieure 12 dans le sens horaire pour revenir dans une position dans laquelle ces deux parties sont axialement en regard l'une de l'autre.

Puis, dans une deuxième phase de la fermeture du moule 10, les parties inférieure 12 et supérieure 14 se rapprochent axialement l'une de l'autre comme cela est illustré à la figure 12. Dans la position représentée sur cette figure 12, le doigt 46 de chaque secteur vient d'entrer en contact avec la partie en saillie 54 de l'organe d'accouplement 20 inférieur associé audit secteur.

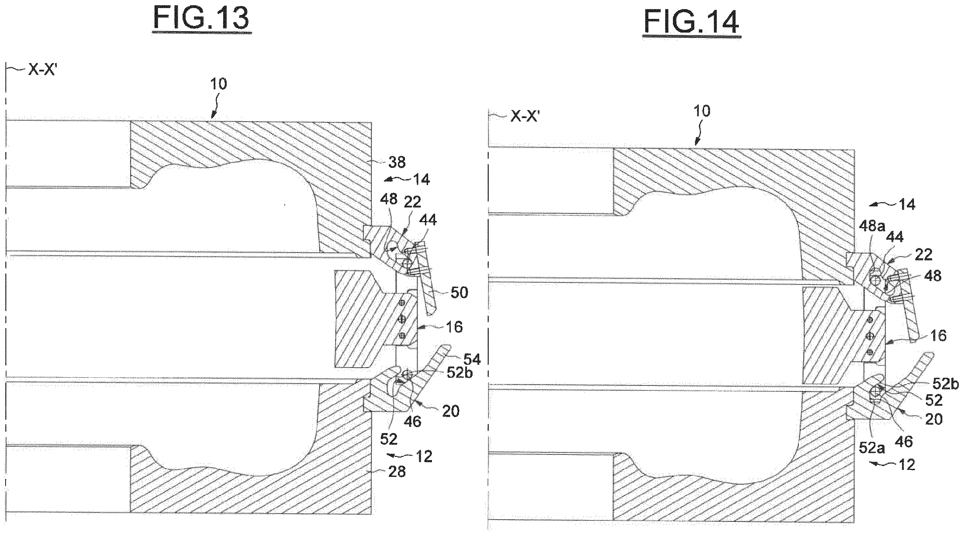

Ensuite, lors de la poursuite du mouvement de rapprochement axial des parties inférieure 12 et supérieure 14, dans une troisième phase, chaque secteur 16 bascule angulairement vers l'intérieur du moule comme cela est illustré à la figure 13. Le basculement angulaire de chaque secteur 16 se produit sous l'effet du contact entre le doigt 46 dudit secteur et la partie en saillie 54 de l'organe d'accouplement 20 inférieur. Le basculement angulaire de chaque secteur 16 s'effectue autour du doigt 44 dudit secteur dans le sens horaire. Chaque secteur 16 est donc ramené dans sa position reculée par rapport à sa position de moulage. Lors de cette phase du mouvement de rapprochement axial des parties inférieure 12 et supérieure 14, le basculement angulaire de chaque secteur 16 s'effectue dès que la force de réaction exercée sur le doigt 44 par la partie en saillie 54 de l'organe d'accouplement 20 est supérieure à la force d'attraction magnétique des aimants du secteur.

Dans une quatrième phase du mouvement de rapprochement axial des parties inférieure 12 et supérieure 14, les doigts 44, 46 de chaque secteur coulissent à l'intérieur des parties obliques 48b, 52b des rainures des organes d'accouplement 22, 20 comme cela est illustré à la figure 14. Lors de cette phase, il se produit un déplacement radial vers l'intérieur de chaque secteur 16 à partir de sa position reculée jusqu'à sa position de moulage. Chaque secteur 16 se trouve dans sa position reculée lorsque les doigts 44, 46 dudit secteur sont situés aux extrémités des parties obliques 48b, 52b des rainures se raccordant aux parties axiales 48a, 52a.

Enfin, lors d'une cinquième et dernière phase du mouvement de rapprochement axial des parties inférieure 12 et supérieure 14, les doigts 44, 46 de chaque secteur coulissent axialement à l'intérieur des parties axiales 48a, 52a des rainures des organes d'accouplement 22, 20 jusqu'à ce que les couronnes 28, 38 viennent axialement en appui contre les secteurs 16 dans la position de fermeture du moule illustrée à la figure 15.

Lors de la fermeture du moule 10, les secteurs 16 se déplacent donc selon une cinématique inverse à celle qui se produit lors de l'ouverture dudit moule.

Par ailleurs, comme indiqué précédemment, dans l'exemple de réalisation illustré, lors de la phase d'ouverture, lorsque le doigt 44 de chaque secteur est situé à l'extrémité de la partie oblique 48b de la rainure de l'organe d'accouplement 22, le doigt 46 dudit secteur est situé hors de la partie oblique 52b ouverte de la rainure 52 de l'organe d'accouplement 20. En variante, il serait possible de prévoir pour la rainure 52 une partie oblique 52b allongée en prévoyant toutefois que les parois latérales de cette partie s'évasent vers l'extérieur de sorte à ne pas entraver ensuite le basculement angulaire du secteur.

L'invention a été décrite sur la base d'un moule permettant le moulage d'un pneumatique pour un véhicule à usage agricole. Il est possible sans sortir du cadre de l'invention d'utiliser un tel moule à secteurs pour la fabrication d'un pneumatique pour tout véhicule terrestre, incluant de manière non limitative les véhicules du type véhicule de tourisme, véhicule utilitaire, véhicule de type poids lourd, ou encore véhicule génie-civil.

## Revendications

1. Moule pour pneumatique du type comprenant une bande de roulement et deux flancs latéraux, le moule comprenant :
des parties inférieure (12) et supérieure (14) destinées à assurer le moulage d'au moins les flancs latéraux du pneumatique qui sont mobiles au moins axialement l'une relativement à l'autre entre une position rapprochée de moulage du pneumatique et une position éloignée de démoulage dudit pneumatique, et
une pluralité de secteurs (16) centraux en contact axialement contre les parties inférieure (12) et supérieure (14) dans leur position rapprochée de moulage et destinés à assurer le moulage d'au moins une partie centrale de la bande de roulement dudit pneumatique,
lesdits secteurs étant répartis dans le sens circonférentiel et mobiles par rapport auxdites parties inférieure et supérieure, **caractérisé en ce que** le moule comprend en outre pour chaque secteur (16) :
un organe d'accouplement permanent (22) dudit secteur à la partie supérieure (14) qui est solidaire de ladite partie supérieure, et un organe d'accouplement temporaire (20) dudit secteur à la partie inférieure (12) qui est solidaire de ladite partie inférieure, lesdits organes d'accouplement (20, 22) étant configurés pour obtenir :
lors d'un mouvement d'éloignement axial des parties inférieure (12) et supérieure (14) depuis leur position rapprochée de moulage, un déplacement radial vers l'extérieur dudit secteur (16) suivi d'un basculement angulaire vers l'extérieur dudit secteur sous l'effet de son propre poids autour d'un axe perpendiculaire auxdites directions de déplacement axial et radial, et
lors d'un mouvement de rapprochement axial des parties inférieure (12) et supérieure (14) depuis leur position éloignée de démoulage, des mouvements inverses dudit secteur.

2. Moule selon la revendication 1, dans lequel les parties inférieure (12) et supérieure (14) sont pourvues chacune d'une face d'appui (28b, 38b) en contact axial contre une face frontale (16b, 16c) de chaque secteur (16) dans la position rapprochée de moulage desdites parties, et d'une face de maintien (28c, 38c) tronconique prolongeant vers l'intérieur ladite face d'appui et engagée radialement contre une face extérieure (16d) complémentaire de chaque secteur dans ladite position rapprochée de moulage.

3. Moule selon la revendication 2, dans lequel les organes d'accouplement permanent (22) et temporaire (20) associés à chaque secteur (16) sont configurés pour obtenir, lors de l'éloignement axial des parties inférieure (12) et supérieure (14) depuis leur position rapprochée, le désengagement dudit secteur desdites parties inférieure et supérieure avant son déplacement radial vers l'extérieur.

4. Moule selon l'une quelconque des revendications précédentes, dans lequel chacun des organes d'accouplement permanent (22) et temporaire (20) associés à chaque secteur comprend une rainure de guidage (48, 52) à l'intérieur de laquelle est engagé de manière coulissante un doigt (44, 46) dudit secteur et qui est pourvue d'au moins une partie oblique (48b, 52b) pour assurer les déplacements radiaux dudit secteur.

5. Moule selon la revendication 4, dans lequel le doigt (44) dudit secteur engagé dans la rainure de guidage (48) de l'organe d'accouplement permanent (22) forme l'axe de basculement dudit secteur.

6. Moule selon la revendication 4 ou 5, dans lequel la partie oblique (52b) de la rainure de guidage dudit organe d'accouplement temporaire (20) est ouverte à une extrémité.

7. Moule selon l'une quelconque des revendications 4 à 6 dépendante de la revendication 3, dans lequel la rainure de guidage (48, 52) de chacun des organes d'accouplement permanent (22) et temporaire (20) associés à chaque secteur est pourvue en outre d'une partie axiale (48a, 52a) pour assurer le désengagement dudit secteur des parties inférieure (12) et supérieure (14), la partie oblique (48b, 52b) de ladite rainure de guidage prolongeant vers l'extérieur la partie axiale (48a, 52a).

8. Moule selon l'une quelconque des revendications 4 à 7, dans lequel l'organe d'accouplement temporaire (20) associé à chaque secteur comprend, dans le prolongement de la partie oblique (52b) de la rainure de guidage (52), une partie en saillie (54) venant en contact contre le doigt (46) dudit secteur lors du rapprochement axial des parties inférieure (12) et supérieure (14) pour ramener ledit secteur de sa position basculée.

9. Moule selon l'une quelconque des revendications précédentes, dans lequel chacune des parties inférieure (12) et supérieure (14) comprend une couronne (28, 38) destinée à assurer le moulage d'une partie latérale de la bande de roulement du pneumatique adjacente à la partie centrale de ladite bande, les secteurs (16) étant interposés axialement entre les couronnes (28, 38) desdites parties inférieure et supérieure dans leur position rapprochée de moulage.

10. Moule selon l'une quelconque des revendications précédentes, dans lequel les organes d'accouplement permanent (22) et temporaire (20) associés à chaque secteur (16) sont fixés respectivement sur une surface extérieure des parties inférieure (12) et supérieure (14).

11. Moule selon la revendication 10 dépendante de la revendication 9, dans lequel les organes d'accouplement permanent (22) et temporaire (20) associés à chaque secteur (16) sont fixés respectivement sur la surface extérieure des couronnes (28, 38) des parties inférieure et supérieure.

12. Moule selon l'une quelconque des revendications précédentes, comprenant en outre des moyens de verrouillage de chaque secteur (16) dans sa position basculée.

13. Moule selon la revendication 12, dans lequel les moyens de verrouillage comprennent au moins un aimant permanent fixé sur chaque secteur (16) et apte à maintenir la position basculée dudit secteur par la force d'attraction magnétique exercée sur l'organe d'accouplement permanent (22) associé audit secteur.

14. Pneumatique obtenu par moulage à l'aide d'un moule selon l'une quelconque des revendications précédentes.

15. Procédé de moulage d'un pneumatique à l'aide d'un moule selon l'une quelconque des revendications précédentes et comprenant les étapes successives suivantes :
introduire une ébauche du pneumatique non vulcanisée dans le moule en configuration ouverte des parties inférieure et supérieure dudit moule,
fermer le moule par rapprochement axial des parties inférieure et
supérieure dudit moule provoquant un basculement angulaire des secteurs dans le sens horaire puis un mouvement radial vers l'intérieur desdits secteurs,
mouler le pneumatique,
ouvrir le moule par éloignement axial des parties inférieure et
supérieure dudit moule provoquant un mouvement radial vers l'extérieur des secteurs puis un basculement angulaire desdits secteurs dans le sens anti-horaire, et
extraire hors du moule le pneumatique moulé.

## Patentansprüche

1. Form für einen Reifen des Typs, der einen Laufstreifen und zwei Seitenwände umfasst, wobei die Form umfasst:
einen unteren (12) und einen oberen (14) Teil, die dazu bestimmt sind, das Formen wenigstens der Seitenwände des Reifens sicherzustellen, und die wenigstens axial relativ zueinander zwischen einer angenäherten Position des Formens des Reifens und einer entfernten Position des Entformens des Reifens beweglich sind, und
mehrere mittlere Sektoren (16), die sich axial in Kontakt mit dem unteren (12) und dem oberen (14) Teil in deren angenäherter Position des Formens befinden und dazu bestimmt sind, das Formen wenigstens eines mittleren Teils des Laufstreifens des Reifens sicherzustellen,
wobei die Sektoren in der Umfangsrichtung verteilt sind und in Bezug auf den unteren und den oberen Teil beweglich sind, **dadurch gekennzeichnet, dass** die Form außerdem für jeden Sektor (16) umfasst:
ein Organ zur dauerhaften Kopplung (22) des Sektors mit dem oberen Teil (14), welches mit dem oberen Teil fest verbunden ist, und ein Organ zur vorübergehenden Kopplung (20) des Sektors mit dem unteren Teil (12), welches mit dem unteren Teil fest verbunden ist, wobei die Kopplungsorgane (20, 22) dazu ausgebildet sind zu bewirken:
bei einer Bewegung des axialen Entfernens des unteren (12) und des oberen (14) Teils aus ihrer angenäherten Position des Formens, eine radiale Verlagerung des Sektors (16) nach außen, gefolgt von einem Kippen des Sektors, unter der Wirkung seines Eigengewichts, um einen Winkel nach außen um eine Achse, die zu den Richtungen der axialen und radialen Verlagerung senkrecht ist, und bei einer Bewegung der axialen Annäherung des unteren (12) und des oberen (14) Teils aus ihrer entfernten Position des Entformens, umgekehrte Bewegungen des Sektors.

2. Form nach Anspruch 1, wobei der untere (12) und der obere (14) Teil jeweils mit einer Stützfläche (28b, 38b) versehen sind, die sich in der angenäherten Position des Formens der Teile in axialem Kontakt mit einer Stirnfläche (16b, 16c) jedes Sektors (16) befindet, und mit einer kegelstumpfförmigen Haltefläche (28c, 38c), welche die Stützfläche nach innen verlängert und in der angenäherten Position des Formens radial an einer komplementären Außenfläche (16d) jedes Sektors angreift.

3. Form nach Anspruch 2, wobei die Organe zur dauerhaften (22) und zur vorübergehenden (20) Kopplung, die jedem Sektor (16) zugeordnet sind, dazu ausgebildet sind, beim axialen Entfernen des unteren (12) und des oberen (14) Teils aus ihrer angenäherten Position das Lösen des Sektors von dem unteren und dem oberen Teil vor seiner radialen Verlagerung nach außen zu bewirken.

4. Form nach einem der vorhergehenden Ansprüche, wobei jedes der Organe zur dauerhaften (22) und zur vorübergehenden (20) Kopplung, die jedem Sektor zugeordnet sind, eine Führungsnut (48, 52) umfasst, in deren Inneres ein Finger (44, 46) des Sektors gleitend eingreift und die mit wenigstens einem schrägen Teil (48b, 52b) versehen ist, um die radialen Verlagerungen des Sektors sicherzustellen.

5. Form nach Anspruch 4, wobei der Finger (44) des Sektors, der in die Führungsnut (48) des Organs zur dauerhaften Kopplung (22) eingreift, die Kippachse des Sektors bildet.

6. Form nach Anspruch 4 oder 5, wobei der schräge Teil (52b) der Führungsnut des Organs zur vorübergehenden Kopplung (20) an einem Ende offen ist.

7. Form nach einem der Ansprüche 4 bis 6 in Abhängigkeit von Anspruch 3, wobei die Führungsnut (48, 52) jedes der Organe zur dauerhaften (22) und zur vorübergehenden (20) Kopplung, die jedem Sektor zugeordnet sind, außerdem mit einem axialen Teil (48a, 52a) versehen ist, um das Lösen des Sektors von dem unteren (12) und dem oberen (14) Teil sicherzustellen, wobei der schräge Teil (48b, 52b) der Führungsnut den axialen Teil (48a, 52a) nach außen verlängert.

8. Form nach einem der Ansprüche 4 bis 7, wobei das jedem Sektor zugeordnete Organ zur vorübergehenden Kopplung (20) in der Verlängerung des schrägen Teils (52b) der Führungsnut (52) einen vorstehenden Teil (54) umfasst, der bei der axialen Annährung des unteren (12) und des oberen (14) Teils mit dem Finger (46) des Sektors in Kontakt kommt, um den Sektor aus seiner gekippten Position zurückzuholen.

9. Form nach einem der vorhergehenden Ansprüche, wobei der untere (12) und der obere (14) Teil jeweils einen Kranz (28, 38) umfassen, der dazu bestimmt ist, das Formen eines seitlichen Teils des Laufstreifens des Reifens, der dem mittleren Teil des Laufstreifens benachbart ist, sicherzustellen, wobei die Sektoren (16) axial zwischen den Kränzen (28, 38) des unteren und des oberen Teils in deren angenäherter Position des Formens angeordnet sind.

10. Form nach einem der vorhergehenden Ansprüche, wobei die Organe zur dauerhaften (22) und zur vorübergehenden (20) Kopplung, die jedem Sektor (16) zugeordnet sind, an einer Außenfläche des unteren (12) bzw. oberen (14) Teils befestigt sind.

11. Form nach Anspruch 10 in Abhängigkeit von Anspruch 9, wobei die Organe zur dauerhaften (22) und zur vorübergehenden (20) Kopplung, die jedem Sektor (16) zugeordnet sind, an der Außenfläche der Kränze (28, 38) des unteren bzw. oberen Teils befestigt sind.

12. Form nach einem der vorhergehenden Ansprüche, welche außerdem Mittel zur Verriegelung jedes Sektors (16) in seiner gekippten Position umfasst.

13. Form nach Anspruch 12, wobei die Mittel zur Verriegelung wenigstens einen Permanentmagneten umfassen, der an jedem Sektor (16) befestigt ist und dafür ausgelegt ist, die gekippte Position des Sektors durch die magnetische Anziehungskraft, die auf das dem Sektor zugeordnete Organ zur dauerhaften Kopplung (22) ausgeübt wird, aufrechtzuerhalten.

14. Reifen, welcher durch Formen mithilfe einer Form nach einem der vorhergehenden Ansprüche erhalten wird.

15. Verfahren zum Formen eines Reifens mithilfe einer Form nach einem der vorhergehenden Ansprüche, welches die folgenden aufeinander folgenden Schritte umfasst:
Einführen eines nicht vulkanisierten Rohlings des Reifens in die Form in einer offenen Konfiguration des unteren und oberen Teils der Form,
Schließen der Form durch axiale Annäherung des unteren und des oberen Teils der Form, welche ein Kippen der Sektoren im Uhrzeigersinn um einen Winkel und anschließend eine radiale Bewegung der Sektoren nach innen hervorruft,
Formen des Reifens,
Öffnen der Form durch axiales Entfernen des unteren und des oberen Teils der Form, welches eine radiale Bewegung der Sektoren nach außen und anschließend ein Kippen der Sektoren entgegen dem Uhrzeigersinn um einen Winkel hervorruft, und
Entnehmen des geformten Reifens aus der Form.

## Claims

1. Mould for a tyre of the type comprising a tread and two side walls, the mould comprising:
lower (12) and upper portions (14) which are intended for moulding at least the side walls of the tyre and movable at least axially relative to one another between a close-together position for moulding the tyre and a distanced position for extracting said tyre from the mould, and
a plurality of central sectors (16) which are in axial contact with the lower (12) and upper portions (14) in their close-together moulding position and are intended to ensure the moulding of at least a central portion of the tread of said tyre, said sectors being distributed in the circumferential direction and movable relative to the lower and upper portions, **characterized in that** for each sector (16), the mould furthermore comprises:
a member (22) for permanently coupling said sector to the upper portion (14) and integral with said upper portion, and a member (20) for temporarily coupling said sector to the lower portion (12) and integral with said lower portion, said coupling members (20, 22) being configured so as to obtain:
during an axial distancing movement of the lower (12) and upper portions (14) from their close-together moulding position, a radial displacement of said sector (16) toward the outside followed by an angular pivoting of said sector towards the outside under the effect of its own weight, around an axis perpendicular to said directions of axial and radial displacement, and
during an axial approaching movement of the lower (12) and upper portions (14) from their distanced position for extraction from the mould, reverse movements of said sector.

2. Mould according to Claim 1, wherein the lower (12) and upper portions (14) are each provided with a support face (28b, 38b) in axial contact with a front face (16b, 16c) of each sector (16) in the close-together moulding position of said portions, and a tapered holding face (28c, 38c) extending said support face towards the inside and radially engaged against a complementary outer face (16d) of each sector in said close-together moulding position.

3. Mould according to Claim 2, wherein the permanent (22) and temporary coupling members (20) associated with each sector (16) are configured so as to obtain, during the axial distancing of the lower (12) and upper portions (14) from their close-together position, the disengagement of said sector from said lower and upper portions before its radial movement towards the outside.

4. Mould according to any of the preceding claims, wherein each of the permanent (22) and temporary coupling members (20) associated with each sector comprises a guide groove (48, 52), inside which a finger (44, 46) of said sector is engaged in sliding fashion and which is provided with at least one oblique portion (48b, 52b) for ensuring the radial displacements of said sector.

5. Mould according to Claim 4, wherein the finger (44) of said sector engaged in the guide groove (48) of the permanent coupling member (22) forms the pivot axis of said sector.

6. Mould according to Claim 4 or 5, wherein the oblique portion (52b) of the guide groove of said temporary coupling member (20) is open at one end.

7. Mould according to any of Claims 4 to 6 dependent on Claim 3, wherein the guide groove (48, 52) of each of the permanent (22) and temporary coupling members (20) associated with each sector is also provided with an axial portion (48a, 52a) for ensuring the disengagement of said sector from the lower (12) and upper portions (14), the oblique portion (48b, 52b) of said guide groove extending the axial portion (48a, 52a) towards the outside.

8. Mould according to any of claims 4 to 7, wherein the temporary coupling member (20) associated with each sector comprises, in the extension of the oblique portion (52b) of the guide groove (52), a protruding portion (54) coming into contact with the finger (46) of said sector during the axial approach of the lower (12) and upper portions (14), in order to return said sector from its pivoted position.

9. Mould according to any of the preceding claims, wherein each of the lower (12) and upper portions (14) comprises a ring (28, 38) intended for moulding a side portion of the tyre tread adjacent to the central portion of said tread, the sectors (16) being axially interposed between the rings (28, 38) of said lower and upper portions in their close-together moulding position.

10. Mould according to any of the preceding claims, wherein the permanent (22) and temporary coupling members (20) associated with each sector (16) are fixed to an outer surface of the lower (12) and upper portions (14) respectively.

11. Mould according to Claim 10 dependent on Claim 9, wherein the permanent (22) and temporary coupling members (20) associated with each sector (16) are fixed to an outer surface of the rings (28, 38) of the lower and upper portions respectively.

12. Mould according to any of the preceding claims, also comprising means for locking each sector (16) in its pivoted position.

13. Mould according to claim 12, wherein the locking means comprise at least one permanent magnet fixed on each sector (16) and able to maintain the pivoted position of said sector by the magnetic attraction force exerted on the permanent coupling member (22) associated with said sector.

14. Tyre obtained by moulding using a mould according to any of the preceding claims.

15. Method for moulding a tyre using a mould as claimed in any of the preceding claims and comprising the following successive steps:
introducing an unvulcanised tyre blank into the mould in the open configuration of the lower and upper portions of said mould,
closing the mould by axially bringing together the lower and upper portions of said mould, causing an angular pivoting of the sectors in the clockwise direction followed by a radial movement of said sectors towards the inside,
moulding the tyre,
opening the mould by axially distancing the lower and upper portions of said mould, causing a radial movement of the sectors towards the outside followed by an angular pivoting of said sectors in the counter-clockwise direction, and extracting the moulded tyre from the mould.
